# EUROPEAN PATENT SPECIFICATION

(11) **EP 2 940 536 B1**
(45) Date of publication and mention of the grant of the patent: **03.06.2020**
(21) Application number: 14166560.4
(22) Date of filing: 30.04.2014
(51) Int. Cl.: G05B 13/04, G05B 17/02

(54) **A method for calculating a load distribution among a plurality of rotary machines of a machine station**
Verfahren zur Berechnung einer Lastverteilung unter einer Vielzahl von Rotationsmaschinen einer Maschinenstation
Procédé de calcul d'une répartition de charge parmi une pluralité de machines rotatives d'une station de machine

(43) Date of publication of application: 04.11.2015
(73) Proprietor: ABB Schweiz AG, 5400 Baden (CH)
(72) Inventor: Cortinovis, Andrea, CH-8953 Dietikon (ZH) (CH); Mercangöz, Mehmet, CH-4332 Stein (AG) (CH); Dominguez, Luis, CH-5200 Brugg (AG) (CH); Zanarini, Alessandro, CH-5400 Baden (AG) (CH); Pareschi, Diego, I-20060 Mediglia (MI) (IT)
(74) Representative: De Bortoli, Eros

(56) References cited:
- EP-A2- 2 207 072
- WO-A1-2013/007866
- WO-A1-2013/110324
- US-A1- 2009 210 081
- US-A1- 2013 166 082
- US-A1- 2013 317 629
- PAPARELLA FRANCESCO ET AL: "Load sharing optimization of parallel compressors", 2013 EUROPEAN CONTROL CONFERENCE (ECC), EUCA, 17 July 2013 (2013-07-17), pages 4059-4064, XP032526594, [retrieved on 2013-11-17]

## Description

The present invention relates to a method for calculating a load distribution among a plurality of rotary machines of a machine station.

Industrial, power and utility applications typically exploit machine stations, such as compression stations, pumping stations, power plants and the like, which include multiple rotary machines, such as compressors, pumps, fans, expanders, generators and the like.

In a machine station, rotary machines may be arranged according to various configurations depending on the operating needs of the machine station.

For example, in a gas pumping station, gas compressors may be arranged according to a parallel configuration, a serial configuration or a mixed configuration depending on the throughput/load requirements.

Industrial, power and utility applications generally adopt cascade control architectures to control the operation of a machine station.

As is known, one of the most critical tasks in controlling the operation of a machine station is to balance the operating load among the rotary machines to achieve given operating set-points.

This task is remarkably complicated by the fact that the actual performance characteristics of each rotary machine, at a given operating instant, may be quite different from the original ones that can be found in data sheets.

Each rotary machine is in fact subject to drifts in its performance due to multiple factors, such as variations in operating conditions, damaging, fouling, aging and the like.

In industrial, power and utility applications, different approaches are used for determining the load balancing among the rotary machines of a machine station.

A known solution merely entails to equalize the operating load for all the rotary machines of the machine station.

The practice has shown how this approach may lead to a reduction of the overall performance of the machines station, since the actual operating conditions of each rotary machine are not properly taken into account.

Another solution provides for having one or more rotary machines operating at their nominal working points (i.e. at the working points for which they were designed) and one machine varying its working point, so that the set-points established for whole the machine station are achieved.

Also this approach does not take into account the actual operating conditions of the rotary machines, which may remarkably drift over time.

In addition, it has been experienced how the load distribution among the rotary machines is often subject to relevant disturbances, in particular when the rotary machines are in the start-up or shut-down phase.

Furthermore, in practice, rotary machines are often forced to operate at maximum load instead at their nominal working points. This makes them more susceptible to undesired shut-downs.

US patent 4640665 describes a method for controlling a multi-compressor station, in which load sharing among multiple compressors is determined in such a way to maintain the working point of said compressors equally distant from predetermined limit values.

Also this method is merely based on data-sheet information or predetermined assumptions concerning the operating conditions of the rotary machines.

Document **"**Load sharing optimization of parallel compressors" by Francesco Paparella et al. - 2013 EUROPEAN CONTROL CONFERENCE (ECC), EUCA, 17 JULY 2013 (2013-07-17), PAGES 4059-4064, XP032526594 relates to a known optimization method for managing loads in compression stations. US patent application US2013/319629A1 relates to a known optimization method for managing complex processes in multi-unit plants.

The main aim of the present invention is to provide a method for calculating a load distribution among multiple rotary machines of a machine station, which allows overcoming the above-described drawbacks.

Within the scope of this main aim, another object of the present invention is to provide a method that allows properly taking into account the actual operating conditions of the rotary machines while calculating the load distribution at a given operating instant.

Another objective of the present invention is to provide a method that is robust and reliable even when rotary machines operate at different operating conditions one from another, in particular during their start-up or shut-down phase.

Another objective of the present invention is to provide a method that is relatively easy to be implemented by a computerized device, at competitive costs.

The above main aim and objectives, as well as other objects that will become apparent from the following description and attached drawings, are achieved, according to the invention, by a method for calculating a load distribution among a plurality of rotary machines of a machine station, according to the following claims.

The method, according to the invention, provides output data indicative of a load distribution among the rotary machines of the machines station in relation to the actual operating conditions of the machine station and of the rotary machines.

To this aim, the method, according to the invention, calculates, at a given operating instant, a solution to an optimization problem.

Said optimization problem is defined on the base of the actual operating status, operating set-points and/or operating limits of the machine station and of the rotary machines, on the base of the objective performances expected for the rotary machines and on the base of first estimated performance parameters, which provide an estimation of the performance of the rotary machines at a time neighborhood of said given operating instant.

According to a preferred embodiment, the method, according to the present invention, comprises a sequence of steps that are aimed at checking the quality of the performance estimation provided by stored second estimated performance parameters (which may be used to determine said first estimated performance parameters) in relation to the actual operating conditions of said machine station and said rotary machines.

The method, according to the invention, advantageously provides information indicative of the corrections to introduce in the operating set-points of the rotary machines and/or information indicative of which rotary machines to activate/deactivate in order to obtain an optimal load distribution among the rotary machines of the machine station, at each given operating instant.

This allows effectively modifying the configuration of the machine station to achieve the best possible performance in accordance with the typology and the actual operating conditions of the rotary machines.

Advantageously, the method , according to the invention, can also provide information about possible unexplored operating set-points for the rotary machines of the machine stations, at which said rotary machines can operate with an improved efficiency with respect to known operating set-points.

A further aspect of the invention relates to a computer program, which comprises software instructions to implement the method of the invention.

A further aspect of the invention relates to a computerised device that is capable of executing such a computer program.

A further aspect of the invention relates to a method for controlling the operation of a plurality of rotary machines of a machine station, which comprises a step of executing the method of the invention.

A further aspect of the invention relates to a control device for controlling the operation of a plurality of rotary machines of a machine station, which comprises or is capable of **communicating** with such a computerized device.

A further aspect of the invention relates to a control system for controlling the operation of a plurality of rotary machines of a machine station, which comprises such a control device.

Further characteristics and advantages of the present invention will emerge more clearly from the description below, referring to the attached figures, which are given as non-limiting examples, wherein:
- Figure 1 schematically illustrates the method for calculating a load distribution, according to the present invention;
- Figure 2 schematically illustrates the structure of a computer program including software instructions for implementing the method of figure 1;
- Figure 3 schematically illustrates a control system for controlling the operation of a machine station, which implements the method of figure 1;
- Figures 4-8 schematically illustrate some embodiments of the control system of figure 3. With reference to the above-mentioned figures, the present invention relates to a method 1 for calculating a load distribution among a plurality of rotary machines 101 of a machine station 100.

The machine station 100 may be of any type suitable for industrial, power and utility applications, such as, for example, a gas compression station, a hydroelectric station and the like.

The rotary machines 101 may be may be of any type suitable for industrial, power and utility applications, such as, for example, compressors, pumps, fans, expanders, generators and the like.

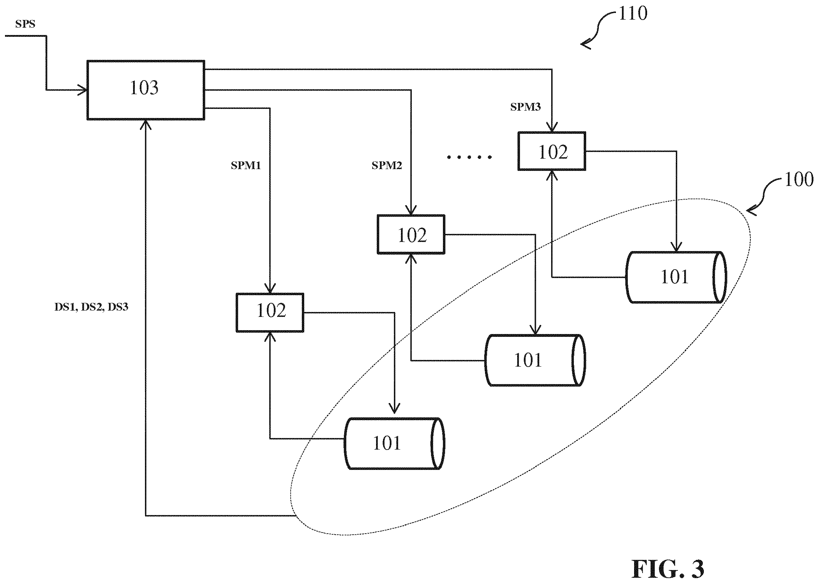

Referring to figure 3, the operation of the rotary machines 101 are is advantageously controlled by a control system 110, which is preferably arranged according to a cascade control architecture.

Preferably, the control system 110 comprises a station controller 103 (e.g. a PID controller) and the machine controllers 102 (e.g. valve regulators, capacity controllers, and the like), each of which is operatively associated with a corresponding rotary machine 101.

The station controller 103 receives one or more station set-points SPS from an external source (e.g. from a DCS or a SCADA system) and provides one or more machine set-points SPM1, SPM2, SPM3 to the machine controllers.

Further, the station controller 103 receives one or more detection signals DS1, DS2, DS3 indicative of the operating status of the rotary machines 101 from sensors or other detection devices installed at machine level.

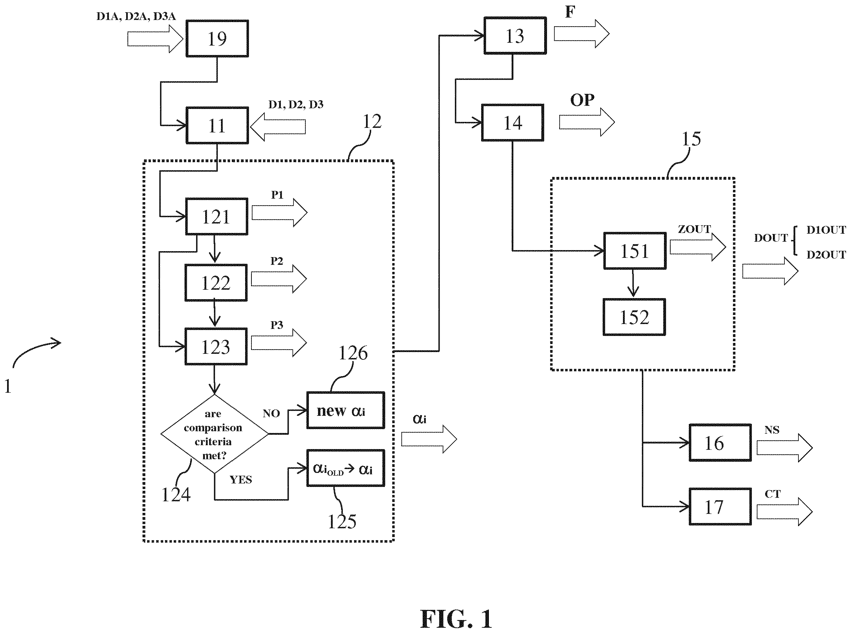

Referring now to figures 1-2, the method 1, according to the invention, will be described in details.

The method 1 can be implemented (e.g. by the computerized device 104, 200) in relation to each rotary machine 101, according to an execution mode of the sequential type.

Preferably, the method 1 is implemented in parallel for all the rotary machines 101 (vectorial execution mode) and it will be described with particular reference to this mode of execution for the sake of brevity.

As mentioned above, the method 1 deals with optimizing the load distribution among the rotary machines 101 in relation to the actual operating conditions of the machine station 100 and of the rotary machines 101.

According to the invention, the method 1 comprises a step 11 of obtaining:
- first data D1 indicative of the operating status of the machine station 100 and of the rotary machines 101 at a first operating instant t₁; and
- second data D2 indicative of the operating set-points established for the machine station and for the rotary machines 100 (e.g. the station set-points SPS and the machine set-points SPM1, SPM2, SPM3) at the first operating instant t₁; and
- third data D3 indicative of the operating limits established for the machine station 100 and for the rotary machines 101 at the first operating instant t₁.

The data D1, D2, D3 can be advantageously provided by or received from any source, such as for example a DCS, a SCADA system or the station controller 103 or a PLC.

The first operating instant t₁ may be any generic operation instant of the machine station 100. As an example, if the control system 110 is digitally implemented, the first operating instant t₁ may be a generic sampling instant, at which the data D1, D2, D3 are received by the computerised device 104, 200.

In an embodiment of the invention, the method 1 comprises the following steps (collectively indicated by reference 19):
- receiving first preliminary data D1A indicative of the operating status of the machine station 100 and of the rotary machine 101 at the first operating instant t₁;
- receiving second preliminary data D2A indicative of the operating set-points established for the machine station 100 and of the rotary machine 101 at the first operating instant t₁;
- receiving third preliminary data D3A indicative of the operating limits established for the machine station 100 and of the rotary machine 101 at the first operating instant t₁;
- processing the preliminary data D1A, D2A, D3A to obtain the first, second and third data D1, D2, D3.

This solution is quite advantageous when the available input data are somehow inconsistent and need to be further processed to obtain the data D1, D2, D3 suitable for the following steps of the method 1.

The processing of the preliminary data D1A, D2A, D3A may involve processing operations such as steady-state detection, filtering, smoothing and the like.

Preferably, the data D1, D2, D3 are stored in a first memory M1 as soon as they are obtained. Preferably, the first and the second data D1, D2 are also stored in a data buffer BUF.

The data buffer BUF is capable to make available the stored data at a future operating instant, which follows the operating instant t₁.

Preferably, the data buffer BUF organizes and makes available the stored data according to a FIFO (First Input-First Output) queue.

In general, the data buffer BUF operates in an asynchronous manner with respect to the execution timing of the method 1.

In fact, as it will emerge more clearly from the following, the future operating instant, at which the data buffer BUF makes available the stored data, is basically selected on the base of the actual operating conditions of the machine station 100 and of the rotary machines 101 and typically depends on whether the rotary machines 101 have been subject to relevant drifts in their performance.

According to the invention, after the obtaining of the data D1, D2, D3, the method 1 comprises the step 12 of determining one or more first estimated performance parameters αi to estimate the performance of the rotary machines 101 at a time neighborhood of the first operating instant t₁.

For the sake of clarity, it is evidenced that the term "estimate the performance" has to be intended as referring to the estimation of one or more quantities indicative of the performance of the rotary machines 101. Said performance quantities may be selected depending on the application, in which the method 1 is implemented.

As an example, if the machine station 100 is a gas compression station and the rotary machines are gas compressors, the estimated performance parameters αi may be used to estimate performance quantities such as the efficiency or the throughput of the compressors. The efficiency can be a machine specific efficiency (e.g. isentropic efficiency) or a driver and machine specific efficiency (e.g. combined efficiency).

The estimated performance parameters αi are used by a predefined empirical mathematical model or map to predict the performance of the rotary machines 101 at a time neighborhood of the first operating instant t₁, given the measured performance values at said first instant t₁ (i.e. given the first data D1).

Said empirical mathematical model or map may comprise one or more polynomials, an ARX model, or the like, which are obtained by interpolating historical data related to the performance of the machine station 100 and of the rotary machines 101.

For example, if the machine station is a gas compression station comprising a plurality of compressors, said empirical mathematical model may be a map of the efficiency of said compressors as a function of the compressor flow and compression ratio.

Preferably, the considered time neighborhood of the first operating instant t₁ comprises operating instants that precede and follow the first operating instant t₁. The actual extension of said time neighborhood is advantageously selected depending on the application to which the method 1 is directed.

Preferably, the method 1 comprises the step 121 of calculating first performance data P1, which are indicative of the actual performance of the rotary machines 101 at the first operating instant t₁.

The first performance data P1 are calculated on the base of the first data D1 by using data sheets or mathematical formulas describing the physical behaviour of the rotary machines 101.

Preferably, also the first performance data P1 are stored in the data buffer BUF as soon as they are calculated at the step 121 of the method 1.

As for the stored data D1-D2, also the data P1 will be made available by the data buffer BUF at an operating instant following the first operating instant t₁.

Preferably, the method 1 comprises the step 122 of calculating second performance data P2, which are indicative of the estimated performance of the rotary machines 101 at the first operating instant t₁.

The second performance data P2 are calculated on the base of the first data D1 by means of an empirical mathematical model to estimate the behaviour of the rotary machines 101, which uses one or more second estimated performance parameters αi_{OLD}.

Preferably, the second estimated performance parameters αi_{OLD} are the stored estimation parameters that have already been used to estimate the operating status of the machine station 100 and of the rotary machines 101 at a time neighborhood of a second operating instant t₂, which precedes the first operating instant t₁.

In practice, the second performance data P2 are calculated on the base of the first data D1 by means of an empirical mathematical model, which is fitted with the second estimated performance parameters αi_{OLD} that have been determined at a previous execution of the method, i.e. at an operating instant t₂ preceding the operating instant t₁.

At the first execution cycle of the method 1, the second estimated performance parameters αi_{OLD} are advantageously predetermined and initially stored for usage.

In principle, the second operating instant t₂ may be any generic prior operating instant of the machine station 100, which precedes the instant t₁.

Preferably, the second operating instant t₂ is the instant immediately preceding the instant t₁, with reference of which the method 1 has been executed.

As an example, if the control system 110 is digitally implemented, the second operating instant t₂ may be the last sampling instant preceding the sampling instant t₁.

The described steps 121, 122 of the method 1 may be executed in parallel or sequentially, after the data D1, D2, D3 have been stored in the first memory M1.

It is evidenced that the second performance data P2 provides an estimation of the performance of the rotary machines 101, which can be compared with the actual performance calculated at the step 121. In fact, both the first and second performances data P1, P2 are calculated on the base of the same performance measured values (i.e. the data D1) of the operating status of the machine station 100 and of the rotary machine 101, at the first operating instant t₁.

In this way, it is possible to obtain information about the quality of the stored second estimated performance parameters αi_{OLD} that have been used for obtaining said estimated performance.

To this aim, the method 1 preferably comprises the step 123 of calculating third performance data P3 indicative of a difference between the estimated and the actual performance of the rotary machines 101, at the first operating instant t₁.

The third performance data P3 are advantageously calculated on the base of the first and second performance data P1, P2.

The third performance data P3 are indicative of an error between the estimated and the actual performance of the rotary machines 101. They are thus indicative of changes or drifts occurred in the performance of the rotary machines 101.

In an embodiment of the present invention, the third performance data P3 are calculated as a difference between corresponding values included in the first and second performance data P1, P2.

The third performance data P3 are used to evaluate whether the stored second estimated performance parameters αi_{OLD}, which have already been used for estimating the performance of the rotary machines 101, need to be refitted or may be maintained and adopted to describe the performance of the rotary machines 101 at the first operating instant t₁.

Preferably, the method 1 comprises the step 124 of processing the third performance data P3 to check whether they meet one or more comparison criteria.

In one embodiment of the invention, at the step 124, the third performance data P3 are advantageously compared with predefined threshold data, which are indicative of the maximum acceptable difference between the estimated and actual performance of the rotary machines 101.

Other comparison criteria different from such threshold criteria may be adopted, according to the needs.

It is again evidenced how the described steps 121, 122, 123, 124 form a comparison procedure that is aimed at checking the quality of the performance estimation provided by the stored second estimated performance parameters αi_{OLD} in relation to the actual operating conditions of the machine station 100 and of the rotary machines 101.

If the third performance data P3 meet the mentioned comparison criteria, the second estimated performance parameters αi_{OLD} are still capable of providing a satisfactory estimation of the performance of the rotary machines 101 at the first operating instant t₁, e.g. due to fact that the performance of said machines is unvaried or has been subject to slight drifts.

In this case, the method 1 comprises the step 125 of setting the second estimated performance parameters αi_{OLD} as the first estimated performance parameters αi.

If the third performance data P3 do not meet the mentioned comparison criteria, the second estimated performance parameters αi_{OLD} are no more capable of providing a satisfactory estimation of the performance of the rotary machines 101, e.g. due to the fact that the performance of said machines has been subject to remarkable drifts.

In this case, the method 1 comprises the step 126 of calculating ex-novo the first estimated performance parameters αi on the base of fourth data D4, fifth data D5 and fourth performance data P4.

The fourth data D4 are indicative of the operating status of the machine station 100 and of the rotary machines 101, at a prior operating instant t₃ preceding the first operating instant t₁. The fifth data D5 are indicative of the operating set-points established for the machine station 100 and for the rotary machines 101, at the prior operating instant t₃.

The fourth performance data P4 are indicative of the actual performance of the rotary machines 101, at the prior operating instant t₃.

Preferably, the fourth data D4, the fifth data D5 and the fourth performance data P4 are made available by the data buffer BUF.

Since the data buffer BUF manages the stored data as in a FIFO queue and operates in an asynchronous manner, the prior operating instant t₃ may be any generic operation instant of the machine station 100, which precedes the instant t₁.

In some embodiments of the invention, the prior operating instant t₃ may coincide with the second operating instant t₂, described above.

In some embodiments of the invention, the data buffer BUF may provide the data D4, D5 and P4, so that these latter refer to the sampling instant t₃₌t₂ that immediately precedes the sampling instant t₁, with reference of which the method 1 is executed.

At the step 126 of the method 1, the first estimated performance parameters αi may be calculated ex-novo by merely correcting the second estimated performance parameters αi_{OLD} or by refitting the whole empirical mathematical model describing the performance of the rotary machines 101.

Preferably, the first estimated performance parameters αi are stored in a second memory M2 as soon as they are determined at the step 12 of the method 1.

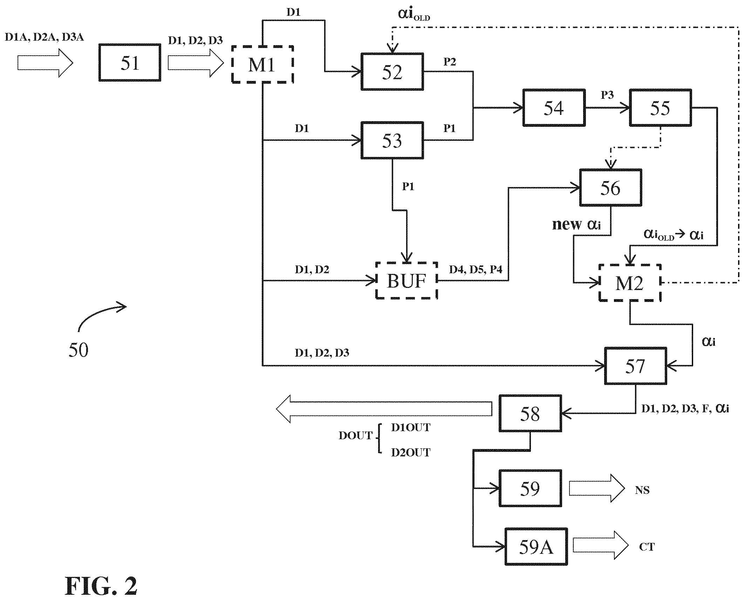

As it is apparent from figure 2, the stored first estimated performance parameters αi will be used as second estimated performance parameters αi_{OLD} at the next execution cycle of the method 1 in order to calculate the second performance data P2.

According to the invention, after having determined the first estimated performance parameters αi, the method 1 comprises the step 13 of providing an optimization cost function F indicative of the objective performance for the rotary machines 101.

The optimization cost function F is determined on the base of the first and second data D1, D2 and on the base of the first estimated performance parameters αi.

The optimization cost function F captures one or more objective quantities describing an objective performance for the rotary machines 101, at the first operating instant t₁.

As an example, if the machine station 100 is a gas compression station and the rotary machines are gas compressors, said objective quantities may include the maximum efficiency, the minimum power consumption, the minimum fuel consumption, the maximum throughput set for said compressors at the first operating instant t₁.

It is evidenced that the optimization cost function F may vary at each execution cycle of the method 1, since the performance characteristics of each rotary machine 101 may vary from an operating instant to another.

At each execution cycle of the method 1, the optimization cost function F is thus preferably re-calculated on the base of the data D1, D2 and on the base of the first estimated performance parameters αi, as obtained or determined at said execution cycle.

According to the invention, the method 1 comprises the step 14 of providing an optimization problem OP on the base of the first, second and third data D1, D2, D3, on the base of the first estimated performance parameters αi and on the base of the optimization cost function F.

In principle, the optimization problem OP may be any type falling under the class of MINLP (Mixed-Integer Non-Linear Problems) but it can belong to a MILP (Mixed-Integer Linear Problems), NLP (Non-Linear Problems), LP (Linear Problems), QP (Quadratic Problems) class depending on the application to which the method 1 is directed.
- In general terms, the optimization problem OP may be expressed as, or similarly to, the problem of finding the minimum or maximum values for the optimization cost function F at the first operating instant t₁,subject to the constraints deriving from the third data D3 indicative of the operating limits established for the machine station 100 and for the rotary machines 101 at the first operating instant t₁.

In practice, the optimization problem OP is a set of differential equations describing the paths of a set of variables (e.g. control variables and/or state variable describing the behavior of the rotary machines 101), which minimize or maximize the optimization cost function F taking into account the operating limits deriving from the data D3.

Sometimes, it is possible to know the machine set-points of the rotary machines 101 in advance, e.g. because they are predetermined (e.g. scheduled by a central control system).

In that case, it is possible to incorporate this information into the optimization problem OP. Such a solution may be useful when the start-up or shut-down of the rotary machines 101 takes a long time and it is important to respond to set-point changes in a bump-less way (i.e. without having over-shoots or under-shoots in the control action of the rotary machines 101).

According to the invention, the method 1 comprises the step 15 of providing output data DOUT indicative of an optimal load distribution among the rotary machines 101 by solving the optimization problem OP.

Preferably, the step 15 of providing the output data DOUT comprises the step 151 of calculating a solution vector ZOUT that solves the optimization problem OP and the step 152 of extracting the output data DOUT from the solution vector ZOUT.

The solution vector ZOUT represents an optimal solution to the formulated **OP** problem at the first operating instant t₁, given the operating constraints existing at said instant t₁.

Preferably, the output data DOUT comprises first output data D1OUT (e.g. adjustment values) indicative of the corrections to introduce in the operating set-points of the rotary machines 101 to obtain said optimal load distribution and/or second output data D2OUT (e.g. logical values) indicative of which rotary machine 101 to activate/deactivate to obtain said optimal load distribution.

The output data DOUT allows the control system 110 to regulate the operation of the rotary machines 101 to obtain an optimal load distribution by properly adjusting the operating machine set-points SPM1, SPM2 SPM3 and/or by properly activating/deactivating said rotary machines.

On the base of the above description, it is apparent how the method 1 allows achieving an optimal load distribution among the rotary machines 101 from time to time (i.e. at each execution cycle or sampling instant thereof) always taking into account the actual operating conditions of the machine station 100 and of the rotary machines 101.

Preferably, the method 1 comprises the step 16 of processing the output data DOUT to obtain new operating set-points NS within the operating ranges of one or more of the rotary machines 101.

Advantageously, the new operating set-points NS are the set-points having a given probability (for example a probability higher than 50%) of providing a higher efficiency for the rotary machines 101 compared to the set-points already used in the operation history of said rotary machines.

In this way, the method 1 allows actively exploring unknown operating points within the operating ranges of a specific machine, which were not considered before in the operation history of the machine itself.

The method 1 can thus be used to actively search for possible new operating set-points that have a relatively high probability of making the rotary machines 101 to operate with an improved efficiency.

Preferably, the method 1 comprises the step 17 of processing the output data DOUT to obtain data CT indicative of common operation trends in the operation of the rotary machines 101. The data CT may be advantageously used to detect possible abnormal operation of the rotary machines 101.

In this way, the method 1 allows checking the behavior of a group of rotary machines 101 in order to identify possible abnormal operation modes of these latter. It is therefore possible to send different warnings to the control room or the end-user and to alert the control room or the end-user.

A further aspect of the invention relates to a method for controlling the operation of the rotary machines 101.

Said control method comprises at least a step of executing the method 1, according to the invention.

In an embodiment, said control method preferably comprises the steps of:
- receiving the station set-points SPS;
- receiving the detection signals DS1, DS2, DS3;
- calculating the output data DOUT by executing the method 1, according to the invention;
- calculating the machine set-points SPM1, SPM2, SPM3 to the machine controllers 102 on the base of the station set-points SPS, the detection signals DS1, DS2, DS3 and the output data DOUT.

Referring to figure 2, a preferred embodiment of a computer program 50, which implements the method 1, is shown.

The computer program 50 can be stored in suitable storage means (e.g. a permanent memory) and comprises software instructions that are executable by a computerized device 104, 200. The computerized device 104, 200 may receive the first, second and third data D1, D2, D3 from any source.

As an alternative, the computerized device 104, 200 may receive the first, second and third preliminary data D1A, D2A, D3A instead of the data D1, D2, D3.

In this case, the computer program 50 comprises a software module 51 that is configured to process the preliminary data D1A, D2A, D3A to obtain the data D1, D2, D3.

The processing of the preliminary data D1A, D2A, D3A may involve processing operations such as steady-state detection, filtering, smoothing and the like.

After having received or obtained the data D1, D2, D3, the computerized device 104, 200 stores these data in the first memory M1.

Preferably, the computerized device 104, 200 stores the data D1, D2 also in the data buffer BUF.

The computer program 50 comprises one or more software modules 52, 53, 54, 55, 56, which are configured to determine the first estimated performance parameters αi.

Preferably, the computer program 50 comprises a software module 53 that is configured to calculate the first performance data P1, on the base of the first data D1.

Preferably, the computerized device 104, 200 stores also the data P1 in the data buffer BUF. Preferably, the computer program 50 comprises a software module 52 that is configured to calculate the second performance data P2, on the base of the first data D1.

Preferably, the computer program 50 comprises a software module 54 that is configured to calculate the third performance data P3, described above, on the base of the data P1, P2. Preferably, the computer program 50 comprises a software module 55 to process the third performance data P3 to check whether said data meet one or more predefined comparison criteria.

If the third performance data P3 meet said comparison criteria, the software module 55 preferably enables the computerised device 104, 200 to set the stored second estimated performance parameters αi_{OLD} as the first estimated performance parameters αi.

If the third performance data P3 do not meet said comparison criteria, the software module 55 activates a software module 56 of the computer program 50.

The software module 56 is configured to calculate ex-novo the first estimated performance parameters αi on the base of the data D4, D5 and P4, which are made available by the data buffer BUF. This amounts to solving a constrained least-squares fitting problem, which can in general be solved using standard methods.

In both cases, the determined first estimated performance parameters αi are advantageously stored by the computerised device 104, 200 in the second memory M2.

The computer program 50 comprises a software module 57 configured to calculate the optimization cost function F on the base of the first and second data D1, D2 and the first estimated performance parameters αi.

The computer program 50 comprises a software module 58 configured to calculate the output data DOUT by formulating and solving the optimization problem OP, on the base of the first, second data and third data D1, D2, D3, the first estimated performance parameters αi and the optimization cost function F.

Preferably, the software module 58 is configured to calculate the solution vector ZOUT that solves the optimization problem OP and extract the output data DOUT from said solution vector.

Preferably, the computer program 50 comprises a software module 59 configured to calculate the new operating set-points NS described above.

Preferably, the computer program 50 comprises a software module 59A configured to calculate the data CT indicative of common operation trends for the rotary machines 101.

A further aspect of the invention relates to computerized device 104, 200 capable of executing a computer program 50 implementing the method 1 of the invention.

According to some embodiments of the present invention, the computerized device 104, 200 may include one or more digital processing devices (e.g. microprocessors or DSPs) to execute the computer program 50.

Alternatively, the computerized device 104, 200 may include distributed processing resources, which are physically positioned in remote locations one from another. For example, the computerized device 104, 200 may be formed by a cloud computing structure. The first and second memory M1, M2 and the data buffer BUF, which are suitable to store the data processed according to the method 1, may be comprised in the computerized device 104, 200 or reside externally to it. In this latter case, stored data may be downloaded/uploaded by the computerized device 104, 200.

Further aspects of the present invention relate to a control device 103, which comprises or it is capable to communicate with a computerised device 104, 200 capable of executing a computer program 50 implementing the method 1 of the invention, and to a control system 110 comprising said control device.

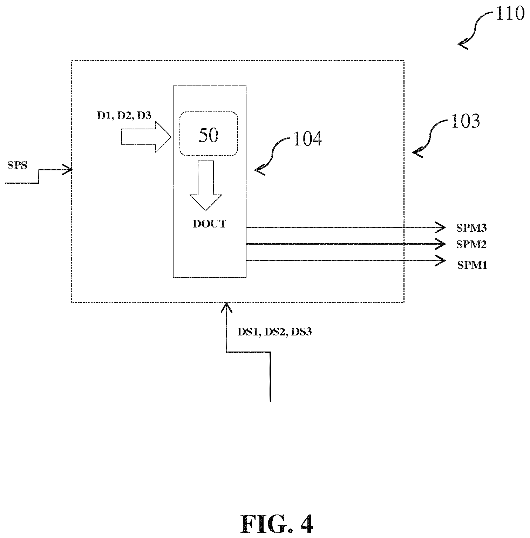

According to a possible embodiment of the present invention, which is shown in figure 4, the control system 110 comprises a control device 103, which operates as station controller.

The control device 103 comprises an internal main computerised device 104 (e.g. a microcontroller) that manages the control operations.

The computerised device 104 is capable of executing a computer program 50 implementing the method 1.

The computer program 50 may be stored in an internal memory of the computerised device 104 (as shown in figure 1) or be uploaded from an external memory for execution.

The computerised device 104 receives or obtains the input data D1, D2, D3 and calculates the output data DOUT, which are then used (by the computerised device 104 itself) to calculate the machine set-points SPM1, SPM2, SPM3 for the rotary machines 101.

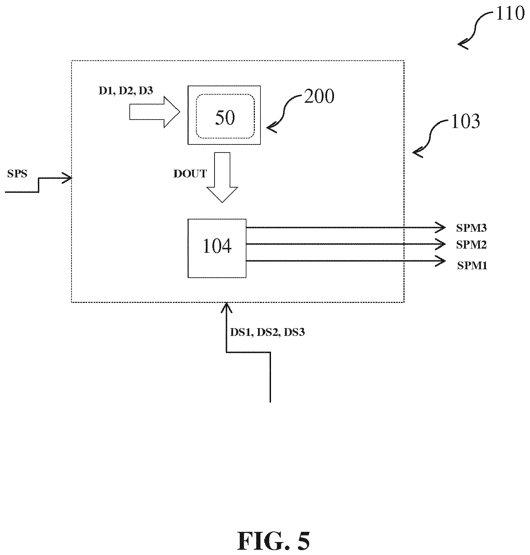

According to another possible embodiment of the present invention, which is shown in figure 5, the control device or station controller 103 comprises an internal main computerised device 104 (e.g. a microcontroller) for managing the control operations and an internal dedicated computerised device 200 (e.g. a further microcontroller) for executing a computer program 50 implementing the method 1.

The computer program 50 may be stored in an internal memory of the computerised device 200 (as shown in figure 1) or be uploaded from an external memory for execution.

The computerised device 200 receives or obtains the input data D1, D2, D3 and calculates the output data DOUT, which are then received by the main computerised device 104 and used by this latter to calculate the machine set-points SPM1, SPM2, SPM3 for the rotary machines 101.

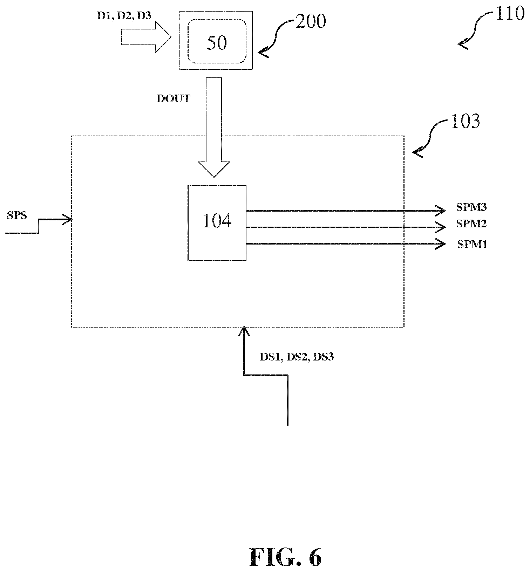

According to another possible embodiment of the present invention, which is shown in figure 6, the control device or station controller 103 is capable to communicate with a remote computerised device 200 that is capable of executing a computer program 50 implementing the method 1.

The computerised device 200 receives or obtains the input data D1, D2, D3 and calculates the output data DOUT, which are then received by the station controller 103.

The station controller 103 comprises an internal computerised device 104 that uses the output data DOUT to calculate the machine set-points SPM1, SPM2, SPM3 for the rotary machines 101.

The embodiments of figures 4, 5, 6 are suitable for real-time control applications implementing the method 1.

As an example, if the control system 110 is digitally implemented, the computer program 50 may be run-time executed by the computerized device 104, 200 at each sampling instant of the control operations.

The method 1 may also be implemented off-line with respect to the control operations implemented by the control system 110.

In this case, the output data DOUT can be used to generate look-up tables that can be stored in the station controller 103 or be downloaded from a remote location.

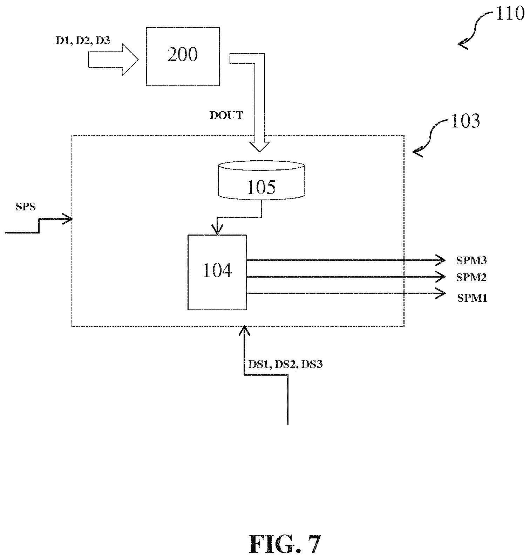

According to another possible embodiment of the present invention, which is shown in figure 7, the control device or station controller 103 comprises an internal computerised device 104 and an internal memory 105.

A remote computerised device 200, which is capable of executing the computer program 50 implementing the method 1, is put in communication with the internal memory 105.

The computerised device 200 receives or obtains the input data D1, D2, D3 and calculates the output data DOUT, in an off-line manner with respect to the operation of the station controller 103.

The output data DOUT are downloaded (preferably in the form of look-up tables) into the internal memory 105 and are then used by the internal computerised device 104 to calculate the machine set-points SPM1, SPM2, SPM3 for the rotary machines 101, when this necessary.

Look-up tables stored in the internal memory 105 may be updated from time to time by the computerised device 200, when this is necessary.

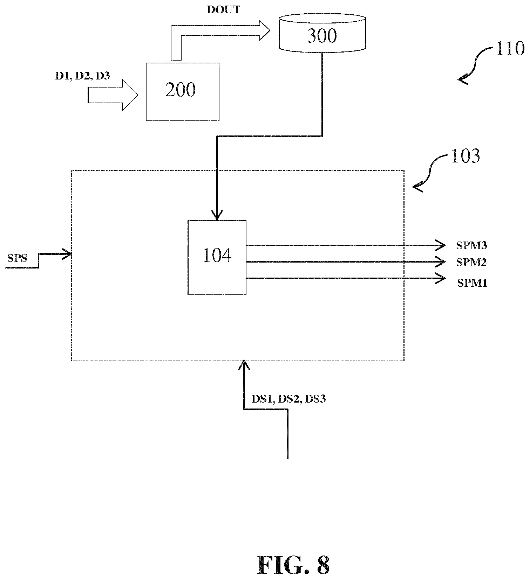

According to another embodiment of the present invention, which is shown in figure 8, the control device or station controller 103 comprises an internal computerised device 104 that is capable to communicate with a remote memory 300.

A remote computerised device 200, which is capable of executing a computer program 50 implementing the method 1, is also put in communication with the memory 300, which may be remotely placed also with respect to said computerised device 200.

The computerised device 200 receives or obtains the input data D1, D2, D3 and calculates the output data DOUT, in an off-line manner with respect to the operation of the station controller 103.

The output data DOUT are downloaded (preferably in the form of look-up tables) into the remote memory 300.

The internal computerised device 104 may upload the output data DOUT from the remote memory 300 to calculate the machine set-points SPM1, SPM2, SPM3 for the rotary machines 101, when this necessary.

Look-up tables stored in the remote memory 300 may be updated from time to time by the computerised device 200, when this is necessary.

As mentioned above, in some embodiments of the invention (such that of figure 8) the optimization problem OP may be solved off-line using parametric programming. As a result, the output data DOUT may be obtained by off-line computed look-up tables. Said tables may be stored in a memory, such as the memory 300 of the embodiment of figure 8.

It has been shown in practice that the method 1, according to the invention, achieves the aim and objects stated above.

The method 1 fully takes into account the actual operating conditions of the rotary machines 101 to calculate an optimal load distribution at a given operating instant t₁.

In this way, the method 1 can be reliably used even when the rotary machines 101 are subject to remarkable performance drifts and/or operate at different operating conditions one from another, in particular during their start-up or shut-down phase.

The method of the invention can be advantageously executed for every single machine of a group of machines with the capability of monitoring the performance of the entire group of machines and identifying possible common trends.

The method 1 is suitable to easily interact with other control processes for controlling the operation of the rotary machine 101.

The method 1 is suitable for both real-time and off-line control applications

The execution of method of the invention can be launched or terminated by the operator and it minimally affects the total computational load or output of the control system 110, since it requires a relatively small computational load for its implementation by a computer program 50.

The method 1 that can thus be easily implemented by a computerized device 104, 200 (installed on the field or remotely located with respect to the machine station 100), at competitive costs with respect to the solutions that are already present in the state of the art.

## Claims

1. A method for calculating a load distribution among a plurality of rotary machines (101) of a machine station (100) comprising the following steps:
- obtaining (11) first data (D1) indicative of the operating status of said machine station and of said rotary machines at a first operating instant, second data (D2) indicative of the operating set-points established for said machine station and for said rotary machines at said first operating instant and third data (D3) indicative of the operating limits established for said machine station and for said rotary machines at said first operating instant; and
- determining (12) one or more first estimated performance parameters (αi) to estimate the performance of said rotary machines at a time neighborhood of said first operating instant, said time neighborhood comprising operating instants preceding and following said first operating instant and having an extension selected depending on the application; and
- providing (13) an optimization cost function (F) indicative of the objective performance for said rotary machines, said optimization cost function being set on the base of said first and second data (D1, D2) and said first estimated performance parameters (αi); and
- providing (14) an optimization problem (OP) on the base of said first, second data and third data (D1, D2, D3), said first estimated performance parameters (αi) and said optimization cost function (F); and
- providing (15) output data (DOUT) indicative of a load distribution among said rotary machines by solving said optimization problem.

2. A method, according to claim 1, **characterised in that** said step (12) of determining said first estimated performance parameters (αi) comprises the following steps:
- calculating (121) first performance data (P1) indicative of the actual performance of said rotary machines at said first operating instant on the base of said first data (D1); and
- calculating (122) second performance data (P2) indicative of the estimated performance of said rotary machines at said first operating instant on the base of said first data, said second performance data being calculated by using one or more stored second estimated performance parameters (αi_{OLD}); and
- calculating (123) third performance data (P3) indicative of a difference between the actual and the estimated performance of said rotary machines at said first operating instant, said third data being calculated on the base of said first and second performance data (P1, P2); and
- processing (124) said third performance data (P3) to check whether they meet one or more comparison criteria;
- if said third performance data (P3) meet said comparison criteria, setting (125) said stored second estimated performance parameters (αi_{OLD}) as said first estimated performance parameters (αi); and
- if said third performance data (P3) do not meet said comparison criteria, calculating (126) said first estimated performance parameters (αi) on the base of fourth data (D4) indicative of the operating status of said machine station and of said rotary machines at a prior operating instant preceding said first operating instant, fifth data (D5) indicative of the operating set-points established for said machine station and for said rotary machines a said prior operating instant and fourth performance data (P4) indicative of the actual performance of said rotary machines at said prior operating instant.

3. A method, according to claim 2, **characterised in that** said fourth data (D4), said fifth data (D5) and said fourth performance data (P4) are provided by a data buffer (BUF).

4. A method, according to claims 1 or 2, **characterised in that** said first and second data (D1, D2) and said first performance data (P1) are stored in a data buffer (BUF).

5. A method, according to claims 3 or 4, **characterised in that** said data buffer (BUF) organizes and makes available the stored data according to a FIFO queue.

6. A method, according to one or more of the previous claims, **characterised in that** it comprises the following steps (19):
- receiving first preliminary data (D1A) indicative of the operating status of said machine station and of said rotary machines at said first operating instant, second preliminary data (D2A) indicative of the operating set-points established for said machine station and for said rotary machines at said first operating instant and third preliminary data (D3A) indicative of the operating limits established for said machine station and for said rotary machines at said first operating instant;
- processing said first, second and third preliminary data (D1A, D2A, D3A) to obtain said first, second and third data (D1, D2, D3).

7. A method, according to one or more of the previous claims, **characterised in that** said output data (DOUT) comprises first output data (D1OUT) indicative of the corrections to introduce in the operating set-points for said rotary machines and/or second output data (D2OUT) indicative of which rotary machine to activate/deactivate.

8. A method, according to one or more of the previous claims, **characterised in that** said step (15) of providing said output data (DOUT) comprises the step (151) of calculating a solution vector (ZOUT) that solves said optimization problem (OP) and the step (152) of extracting said output data (DOUT) from said solution vector (ZOUT).

9. A method, according to one or more of the previous claims, **characterised in that** said optimization problem (OP) is solved off-line using parametric programming, said output data (DOUT) being provided by means of off-line computed look-up tables.

10. A method, according to one or more of the previous claims, **characterised in that** it comprises the step of processing said output data (DOUT) to obtain data (CT) indicative of common operation trends in the operation of said rotary machines, said data indicative of common trends being usable to identify possible abnormal operation modes of said rotary machines.

11. A computer program (50), which can be stored in storage means (104, 105, 300), **characterised in that** it comprises software instructions to implement a method (1), according to one or more of the previous claims.

12. A computerized device (104, 200) **characterised in that** it is configured to execute a computer program (50), according to claim 11.

13. A control device (103) for controlling the operation of a plurality of rotary machines (101) of a machine station (100) **characterised in that** it comprises or is configured to communicate with a computerized device (104, 200), according to claim 12.

14. A control system (110) for controlling the operation of a plurality of rotary machines (101) of a machine station (100) **characterised in that** it comprises a control device, according to claim 13.

## Patentansprüche

1. Verfahren zur Berechnung einer Lastverteilung unter mehreren Rotationsmaschinen (101) einer Maschinenstation (100), das die folgenden Schritte umfasst:
- Erhalten (11) von ersten Daten (D1), die indikativ für den Betriebsstatus der Maschine und der Rotationsmaschinen zu einem ersten Betriebsmoment sind, von zweiten Daten (D2), die indikativ für die Betriebseinstellpunkte sind, die für die Maschinenstation und für die Rotationsmaschinen zum ersten Betriebsmoment aufgestellt wurden, und von dritten Daten (D3), die indikativ für die Betriebsgrenzen sind, die für die Maschinenstation und für die Rotationsmaschinen zum ersten Betriebsmoment aufgestellt wurden; und
- Bestimmen (12) von ein oder mehreren ersten geschätzten Leistungsparametern (ai) zum Schätzen der Leistung der Rotationsmaschinen in einer zeitlichen Nachbarschaft des ersten Betriebsmoments, wobei die zeitliche Nachbarschaft Betriebsmomente umfasst, die dem ersten Betriebsmoment vorangehen und dem ersten Betriebsmoment folgen und eine Ausdehnung haben, die in Abhängigkeit von der Anwendung ausgewählt wird; und
- Bereitstellen (13) einer Optimierungskostenfunktion (F), die indikativ für die objektive Leistung der Rotationsmaschinen ist, wobei die Optimierungskostenfunktion auf Grundlage der ersten und zweiten Daten (D1, D2) und der ersten geschätzten Leistungsparameter (ai) festgelegt wird; und
- Bereitstellen (14) eines Optimierungsproblems (OP) auf Grundlage der ersten, zweiten und dritten Daten (D1, D2, D3), der ersten geschätzten Leistungsparameter (ai) und der Optimierungskostenfunktion (F); und
- Bereitstellen (15) von Ausgabedaten (DOUT), die indikativ für eine Lastverteilung unter den Rotationsmaschinen sind, durch Lösen des Optimierungsproblems.

2. Verfahren nach Anspruch 1, **dadurch gekennzeichnet, dass** der Schritt (12) des Bestimmens der ersten geschätzten Leistungsparameter (ai) die folgenden Schritte umfasst:
- Berechnen (121) von ersten Leistungsdaten (P1), die indikativ für die tatsächliche Leistung der Rotationsmaschinen zum ersten Betriebsmoment sind, auf Grundlage der ersten Daten (D1); und
- Berechnen (122) von zweiten Leistungsdaten (P2), die indikativ für die geschätzte Leistung der Rotationsmaschinen zum ersten Betriebsmoment sind, auf Grundlage der ersten Daten, wobei die zweiten Leistungsdaten durch Verwenden der ein oder mehreren gespeicherten zweiten geschätzten Leistungsparameter (αi_{OLD}) berechnet werden; und
- Berechnen (123) von dritten Leistungdaten (P3), die indikativ für eine Differenz zwischen der tatsächlichen und der geschätzten Leistung der Rotationsmaschinen zum ersten Betriebsmoment sind, wobei die dritten Daten auf Grundlage der ersten und zweiten Leistungsdaten (P1, P2) berechnet werden; und
- Verarbeiten (124) der dritten Leistungsdaten (P3) zum Prüfen, ob sie ein oder mehrere Vergleichkriterien erfüllen;
- wenn die dritten Leistungsdaten (P3) die Vergleichskriterien erfüllen, Festlegen (125) der gespeicherten zweiten geschätzten Leistungsparameter (αi_{OLD}) als die ersten geschätzten Leistungsparameter (αi); und
- wenn die dritten Leistungsdaten (P3) die Vergleichskriterien nicht erfüllen, Berechnen (126) der ersten geschätzten Leistungsparameter (ai) auf Grundlage von vierten Daten (D4), die indikativ für den Betriebsstatus der Maschinenstation und der Rotationsmaschinen zu einem früheren Betriebsmoment sind, der dem ersten Betriebsmoment vorangeht, von fünften Daten (D5), die indikativ für die Betriebseinstellpunkte sind, die für die Maschinenstation und für die Rotationsmaschinen zum früheren Betriebsmoment festgelegt wurden, und von vierten Leistungsdaten (P4), die indikativ für die tatsächliche Leistung der Rotationsmaschinen zum früheren Betriebsmoment sind.

3. Verfahren nach Anspruch 2, **dadurch gekennzeichnet, dass** die vierten Daten (D4), die fünften Daten (D5) und die vierten Leistungsdaten (P4) durch einen Datenpuffer (BUF) bereitgestellt werden.

4. Verfahren nach Ansprüchen 1 oder 2, **dadurch gekennzeichnet, dass** die ersten und zweiten Daten (D1, D2) und die ersten Leistungsdaten (P1) in einem Datenpuffer (BUF) gespeichert werden.

5. Verfahren nach Ansprüchen 3 oder 4, **dadurch gekennzeichnet, dass** der Datenpuffer (BUF) die gespeicherten Daten entsprechend einer FIFO-Warteschlange organisiert und verfügbar macht.

6. Verfahren nach einem oder mehreren der vorhergehenden Ansprüche, **dadurch gekennzeichnet, dass** es die folgenden Schritte umfasst (19):
- Empfangen von ersten vorläufigen Daten (D1A), die indikativ für den Betriebsstatus der Maschine und der Rotationsmaschinen zum ersten Betriebsmoment sind, von zweiten vorläufigen Daten (D2A), die indikativ für die Betriebseinstellpunkte sind, die für die Maschinenstation und für die Rotationsmaschinen zum ersten Betriebsmoment aufgestellt wurden, und von dritten vorläufigen Daten (D3A), die indikativ für die Betriebsgrenzen sind, die für die Maschinenstation und für die Rotationsmaschinen zum ersten Betriebsmoment aufgestellt wurden;
- Verarbeiten der ersten, zweiten und dritten vorläufigen Daten (D1A, D2A, D3A) zum Erhalten der ersten, zweiten und dritten Daten (D1, D2, D3).

7. Verfahren nach einem oder mehreren der vorhergehenden Ansprüche, **dadurch gekennzeichnet, dass** die Ausgabedaten (DOUT) erste Ausgabedaten (D1OUT), die indikativ für die Korrekturen sind, die in die Betriebseinstellpunkte für die Rotationsmaschinen einzubringen sind, und/oder zweite Ausgabedaten (D2OUT), die indikativ dafür sind, welche Rotationsmaschine zu aktivieren/deaktivieren ist, umfassen.

8. Verfahren nach einem oder mehreren der vorhergehenden Ansprüche, **dadurch gekennzeichnet, dass** der Schritt (15) des Bereitstellens der Ausgabedaten (DOUT) den Schritt (151) des Berechnens eines Lösungsvektors (ZOUT), der das Optimierungsproblem (OP) löst, und den Schritt (152) des Extrahierens der Ausgabedaten (DOUT) aus dem Lösungsvektor (ZOUT) umfasst.

9. Verfahren nach einem oder mehreren der vorhergehenden Ansprüche, **dadurch gekennzeichnet, dass** das Optimierungsproblem (OP) offline unter Verwendung von parametrischer Programmierung gelöst wird, wobei die Ausgabedaten (DOUT) mittels offline berechneter Nachschlagetabellen bereitgestellt werden.

10. Verfahren nach einem oder mehreren der vorhergehenden Ansprüche, **dadurch gekennzeichnet, dass** es den Schritt des Verarbeitens der Ausgabedaten (DOUT) umfasst, um Daten (CT) zu erhalten, die indikativ für übliche Betriebstrends beim Betrieb der Rotationsmaschinen sind, wobei die Daten, die indikativ für übliche Trends sind, verwendbar sind, um mögliche abnormale Betriebsmodi der Rotationsmaschinen zu identifizieren.

11. Computerprogramm (50), das in Speichermitteln (104, 105, 300) gespeichert sein kann, **dadurch gekennzeichnet, dass** es Softwareanweisungen zum Umsetzen eines Verfahrens (1) nach einem oder mehreren der vorhergehenden Ansprüche umfasst.

12. Computergestützte Vorrichtung (104, 200), **dadurch gekennzeichnet, dass** sie dazu ausgelegt ist, ein Computerprogramm (50) nach Anspruch 11 auszuführen.

13. Steuervorrichtung (103) zum Steuern des Betriebs von mehreren Rotationsmaschinen (101) einer Maschinenstation (100), **dadurch gekennzeichnet, dass** sie eine computergestützte Vorrichtung (104, 200) nach Anspruch 12 umfasst oder dazu ausgelegt ist, mit einer solchen zu kommunizieren.

14. Steuersystem (110) zum Steuern des Betriebs von mehreren Rotationsmaschinen (101) einer Maschinenstation (100), **dadurch gekennzeichnet, dass** es eine Steuervorrichtung nach Anspruch 13 umfasst.

## Revendications

1. Procédé de calcul d'une répartition de charge parmi une pluralité de machines rotatives (101) d'une station de machine (100) comprenant les étapes suivantes :
- l'obtention (11) de premières données (D1) indiquant l'état de fonctionnement de ladite station de machine et desdites machines rotatives à un premier instant de fonctionnement, de deuxièmes données (D2) indiquant les points de consigne de fonctionnement établis pour ladite station de machine et pour lesdites machines rotatives audit premier instant de fonctionnement et de troisièmes données (D3) indiquant les limites de fonctionnement établies pour ladite station de machine et pour lesdites machines rotatives audit premier instant de fonctionnement ; et
- la détermination (12) d'un ou plusieurs premiers paramètres de performance estimés (ai) pour estimer la performance desdites machines rotatives à un voisinage temporel dudit premier instant de fonctionnement, ledit voisinage temporel comprenant des instants de fonctionnement précédant et suivant ledit premier instant de fonctionnement et ayant une extension sélectionnée en fonction de l'application ; et
- la fourniture (13) d'une fonction de coût d'optimisation (F) indiquant la performance objective pour lesdites machines rotatives, ladite fonction de coût d'optimisation étant établie sur la base desdites premières et deuxièmes données (D1, D2) et desdits premiers paramètres de performance estimés (ai) ; et
- la fourniture (14) d'un problème d'optimisation (OP) sur la base desdites premières, deuxièmes et troisièmes données (D1, D2, D3), desdits premiers paramètres de performance estimés (ai) et de ladite fonction de coût d'optimisation (F) ; et
- la fourniture (15) de données de sortie (DOUT) indiquant une répartition de la charge parmi lesdites machines rotatives en résolvant ledit problème d'optimisation.

2. Procédé, selon la revendication 1, **caractérisé en ce que** ladite étape (12) de détermination desdits premiers paramètres de performance estimés (ai) comprend les étapes suivantes :
- le calcul (121) de premières données de performance (P1) indiquant la performance réelle desdites machines rotatives audit premier instant de fonctionnement sur la base desdites premières données (D1) ; et
- le calcul (122) de deuxièmes données de performance (P2) indiquant la performance estimée desdites machines rotatives audit premier instant de fonctionnement sur la base desdites premières données, lesdites deuxièmes données de performance étant calculées en utilisant un ou plusieurs deuxièmes paramètres de performance estimés stockés (αi_{OLD}) ; et
- le calcul (123) de troisièmes données de performance (P3) indiquant une différence entre la performance réelle et la performance estimée desdites machines rotatives audit premier instant de fonctionnement, lesdites troisièmes données étant calculées sur la base desdites premières et deuxièmes données de performance (P1, P2) ; et
- le traitement (124) desdites troisièmes données de performance (P3) pour vérifier si elles satisfont à un ou plusieurs critères de comparaison ;
- si lesdites troisièmes données de performance (P3) satisfont auxdits critères de comparaison, l'établissement (125) desdits deuxièmes paramètres de performance estimés stockés (αi_{OLD}) comme lesdits premiers paramètres de performance estimés (ai) ; et
- si lesdites troisièmes données de performance (P3) ne satisfont pas auxdits critères de comparaison, le calcul (126) desdits premiers paramètres de performance estimés (ai) sur la base de quatrièmes données (D4) indiquant l'état de fonctionnement de ladite station de machine et desdites machines rotatives à un instant de fonctionnement antérieur précédant ledit premier instant de fonctionnement, des cinquièmes données (D5) indiquant les points de consigne de fonctionnement établis pour ladite station de machine et pour lesdites machines rotatives audit instant de fonctionnement antérieur et des quatrièmes données de performance (P4) indiquant la performance réelle desdites machines rotatives audit instant de fonctionnement antérieur.

3. Procédé selon la revendication 2, **caractérisé en ce que** lesdites quatrièmes données (D4), lesdites cinquièmes données (D5) et lesdites quatrièmes données de performance (P4) sont fournies par une mémoire tampon de données (BUF).

4. Procédé selon la revendication 1 ou 2, **caractérisé en ce que** lesdites premières et deuxièmes données (D1, D2) et lesdites premières données de performance (P1) sont stockées dans une mémoire tampon de données (BUF).

5. Procédé selon la revendication 3 ou 4, **caractérisé en ce que** ladite mémoire tampon de données (BUF) organise et rend disponible les données stockées selon une file d'attente FIFO.

6. Procédé, selon une ou plusieurs des revendications précédentes, **caractérisé en ce qu'**il comprend les étapes suivantes (19) :
- la réception de premières données préliminaires (D1A) indiquant l'état de fonctionnement de ladite station de machine et desdites machines rotatives audit premier instant de fonctionnement, de deuxièmes données préliminaires (D2A) indiquant les points de consigne de fonctionnement établis pour ladite station de machine et pour lesdites machines rotatives audit premier instant de fonctionnement, et de troisièmes données préliminaires (D3A) indiquant les limites de fonctionnement établies pour ladite station de machine et pour lesdites machines rotatives audit premier instant de fonctionnement ;
- le traitement desdites premières, deuxièmes et troisièmes données préliminaires (D1A, D2A, D3A) pour obtenir lesdites premières, deuxièmes et troisièmes données (D1, D2, D3).

7. Procédé, selon une ou plusieurs des revendications précédentes, **caractérisé en ce que** lesdites données de sortie (DOUT) comprennent des premières données de sortie (D1OUT) indiquant les corrections à introduire dans les points de consigne de fonctionnement pour lesdites machines rotatives et/ou des deuxièmes données de sortie (D2OUT) indiquant quelle machine rotative doit être activée/désactivée.

8. Procédé, selon une ou plusieurs des revendications précédentes, **caractérisé en ce que** ladite étape (15) de fourniture desdites données de sortie (DOUT) comprend l'étape (151) de calcul d'un vecteur de solution (ZOUT) qui résout ledit problème d'optimisation (OP) et l'étape (152) d'extraction desdites données de sortie (DOUT) dudit vecteur de solution (ZOUT).

9. Procédé, selon une ou plusieurs des revendications précédentes, **caractérisé en ce que** ledit problème d'optimisation (OP) est résolu hors ligne en utilisant une programmation paramétrique, lesdites données de sortie (DOUT) étant fournies au moyen de tables de recherche calculées hors ligne.

10. Procédé, selon une ou plusieurs des revendications précédentes, **caractérisé en ce qu'**il comprend l'étape de traitement desdites données de sortie (DOUT) pour obtenir des données (CT) indiquant des tendances de fonctionnement communes dans le fonctionnement desdites machines rotatives, lesdites données indiquant des tendances communes étant utilisables pour identifier des modes de fonctionnement anormaux possibles desdites machines rotatives.

11. Programme informatique (50), qui peut être stocké dans des moyens de stockage (104, 105, 300), **caractérisé en ce qu'**il comprend des instructions logicielles pour mettre en œuvre un procédé (1), selon une ou plusieurs des revendications précédentes.

12. Dispositif informatisé (104, 200) **caractérisé en ce qu'**il est configuré pour exécuter un programme informatique (50), selon la revendication 11.

13. Dispositif de commande (103) pour commander le fonctionnement d'une pluralité de machines rotatives (101) d'une station de machine (100), **caractérisé en ce qu'**il comprend ou est configuré pour communiquer avec un dispositif informatisé (104, 200), selon la revendication 12.

14. Système de commande (110) pour commander le fonctionnement d'une pluralité de machines rotatives (101) d'une station de machine (100), **caractérisé en ce qu'**il comprend un dispositif de commande, selon la revendication 13.
